# FASCICULE DE BREVET EUROPEEN

(11) **EP 0 574 297 B1**
(45) Date de publication et mention de la délivrance du brevet: **03.03.1999**
(21) Numéro de dépôt: 93401452.3
(22) Date de dépôt: 08.06.1993
(51) Int. Cl.: C08G 69/26, C08G 69/28

(54) **Polyamides cristallins à point de fusion élevé**
Kristalline Polyamide mit hohem Schmelzpunkt
Crystalline polyamides with high melting point

(30) Priorité: 12.06.1992 FR 9207083
(43) Date de publication de la demande: 15.12.1993
(73) Titulaire: ELF ATOCHEM S.A., 92800 Puteaux, Hauts-de-Seine (FR)
(72) Inventeur: Sage, Jean-Marc, F-27470 SERQUIGNY (FR)
(74) Mandataire: Hirsch, Marc-Roger

(56) Documents cités:
- EP-A- 0 411 791
- EP-A- 0 463 932
- US-A- 4 246 395
- CHEMICAL ABSTRACTS, vol. 102, no. 4, 1993, Columbus, Ohio, US; abstract no. 25902h, 'Hot-melt adhesives'

## Description

La présente invention a pour objet de nouveaux polyamides cristallins à point de fusion élevé, ainsi que les compositions les contenant et les objets, par exemple moulés, extrudés, obtenus à partir de nouveaux polyamides. Plus particulièrement, la présente invention a pour objet des copolyamides destinés à être utilisés dans la fabrication d'objets, présentant sur tout le domaine de composition une cristallinité élevée avec un ΔH > 3,5 cal/g, présentant un point de fusion élevé pF > 270°C, ainsi que les objets façonnés obtenus à partir de ces copolyamides et se rapporte en outre à leur procédé de préparation.

Les polyamides sont couramment utilisés dans divers types d'industrie. Ces polyamides doivent être dotés de nombreuses propriétés, afin d'être utilisés dans des conditions de plus en plus sévères. Ainsi, il est recherché des polyamides présentant de bonnes propriétés thermomécaniques. Ces polyamides doivent donc présenter ces qualités à des températures élevées, typiquement supérieures ou égales à 250°C, c'est-à-dire que la température de fusion T_{f} est supérieure ou égale à 250°C. Des propriétés mécaniques telles que module de flexion, température de déformation à chaud (HDT), résistance aux chocs, en particulier module de rigidité élevé et autres sont les propriétés mécaniques que doit présenter le copolyamide.

Les propriétés mécaniques sont typiquement liées à la cristallinité des polyamides, qui doit être donc élevée. Par ailleurs, ces polyamides doivent aussi avoir une température de transition vitreuse élevée classiquement supérieure ou égale à 120°C. De plus, comme les polyamides sont constitués de plusieurs monomères, il est souhaitable que les propriétés thermomécaniques des polyamides restent élevées sur tout le domaine de composition du polyamide.

L'homme de l'art recherche donc des copolyamides ayant:
a) une température de fusion T_{f} supérieure ou égale à 250°C;
b) une cristallinité élevée
c) de bonnes propriétés mécaniques telles qu'un module de rigidité élevé,
d) une température de transition vitreuse T_{g} supérieure ou égale à 120°C;
e) un maintien de ces propriétés sur tout le domaine de composition.

Il est connu que les copolyamides renfermant un taux important de motif 6,T (motif dérivé de la condensation de l'hexaméthylène diamine et de l'acide térephtalique) conduisent à des copolyamides à tenue thermomécanique améliorée, c'est-à-dire que leur température de fusion se situe entre 240 et 360°C. Habituellement, pour des raisons de procédé et compte tenu des températures de dégradation des produits, l'homme de l'art recherche des copolyamides renfermant un taux de 6,T appréciable et présentant des températures de fusion situées entre 290 et 320°C. Des températures de fusion supérieures rendent difficiles et la synthèse et la transformation de ces copolyamides en raison des points évoqués précédemment.

Par exemple, l'introduction de motif 6,I, s'il permet bien d'obtenir des copolyamides 6,I/6,T présentant des points de fusion élevés, présente néanmoins l'inconvénient de désorganiser fortement la structure cristalline du copolyamide. Ainsi pour un copolyamide 6,I/6,T de teneur molaire 70/30, on obtient un copolyamide amorphe ne présentant pas de point de fusion. A plus forte teneur en motif 6,T, on obtient des copolyamides cristallins de point de fusion élevé, cependant leur cristallinité chute rapidement pour des teneurs en motif 6,T inférieures à 60% molaire. Similairement, les copolyamides 6/6,T voient leur point de fusion chuter à 215°C pour une teneur molaire de 70/30.

On voit de plus que la température de transition vitreuse pour ces copolyamides est dépendante de la température de fusion, ainsi pour obtenir une température de transition vitreuse de 140°C, il est nécessaire de viser des points de fusion du copolyamide supérieurs ou égaux à 345°C.

EP-0 299 689 décrit des copolyamides contenant le motif 6,T dans lesquels est présent le motif 6,I dans des proportions variables comme indiqué dans le tableau:

| 6,T/6,I | Composition % molaire | Tf | Tg | Cristallinité (%) |
|---|---|---|---|---|
| | 65/35 | 307 | 119 | 14 |
| | 70/30 | 325 | 126 | 25 |
| | 80/20 | 345 | 134 | 29 |

EP-0 299 444 décrit des copolyamides dans lesquels un motif de type lactame aliphatique est copolycondensé avec le motif 6,T.
Cependant, l'introduction de ces motifs aliphatiques diminue la température de transition vitreuse. Dans la pratique, on est limité à des températures de transition vitreuse inférieures à 130°C; de plus, ces groupements en lactames aliphatiques induisent une perte en propriétés mécaniques du matériau, HDT, module de flexion etc.

Un terpolyamide 6,T/6,I/6,N26 de composition 58/32/10 est exemplifié dans le brevet US 4 246 395. Toutefois, il est comparé au copolyamide 6,T/6,I/6,BOB de même composition et les valeurs de Tg et de Tf (135°C/285°C - 133°C/285°C respectivement). Cependant, le motif 6,N26 est considéré comme tiers-monomère.

Seuls, les copolyamides 6,6/6,T (dans la famille de copolyamide renfermant le motif 6,T) sont connus pour présenter une cristallinité marquée sur tout le domaine de composition (voir Isomorphous replacement in copolyamide systems: adipic and terephtalic acid, Yu et al., Journal of Polymer Science, Vol. XVII, p. 249-257 (1960). Toutefois, ces derniers présentent des Tg inférieures à 120°C; de plus, le motif 6,6 (issu de la condensation de l'hexaméthylène diamine avec l'acide adipique) est bien connu pour son manque de stabilité thermique, ce qui en limite l'emploi. Ainsi, on trouve souvent associé ce motif 6,6 en tant que troisième composant des copolyamides 6,I/6,T ou lactames/6,T précités.

Cette particularité, attribuée à un isomorphisme des motifs composant le copolyamide 6,6/6,T, est bien connue de l'homme de l'art et a fait l'objet de nombreuses publications; elle est attribuée à une cocristallinité entre les motifs 6,6 et 6,T. Il est également connu que cette même tendance est vérifiée pour les copolyamides analogues issus d'une autre diamine aliphatique à chaîne plus longue (ex 8,I/8,T). (voir The p-phenylene linkage in linear high polymers: some structure property relationships. Edgar et al., Journal of Polymer Science, Vol. VIII, n°1, p.1-22).

La demande de brevet japonais JP-A-59 126 484 décrit des copolymères comprenant un polyamide formé d'unités dérivant d'un acide dicarboxylique aromatique et d'unités dérivant d'une alkylènediamine alipahtique en C₁₀; lesdits copolymères étant amorphes, ce qui n'est pas le cas des copolymères selon l'invention.

Aucune des références citées ci-dessus ne décrit ni ne suggère les copolyamides objets de la présente invention, qui de façon surprenante possèdent les propriétés a) à e) mentionnées ci-avant.

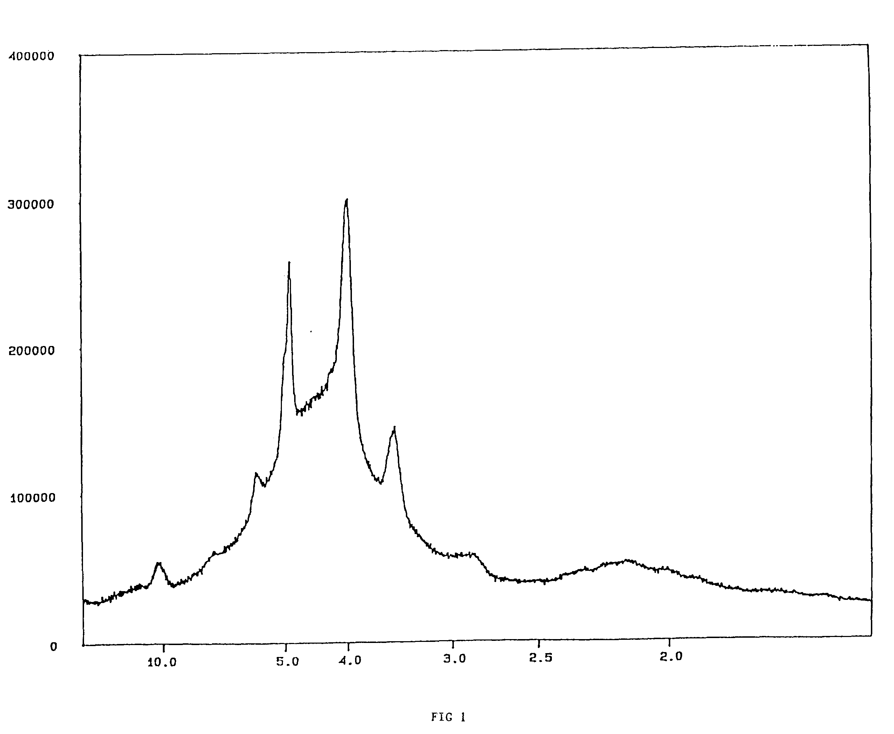

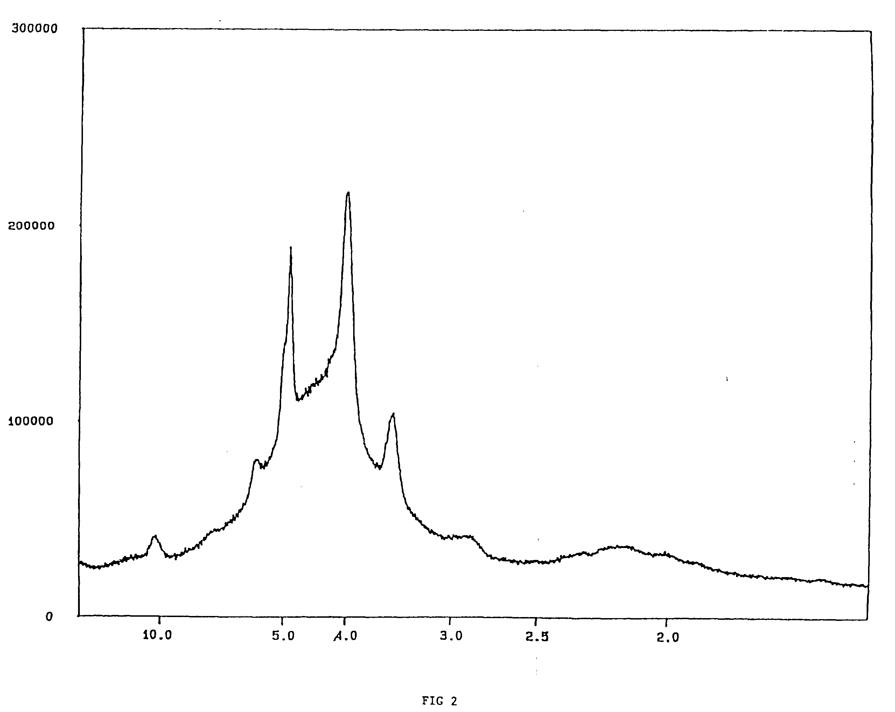

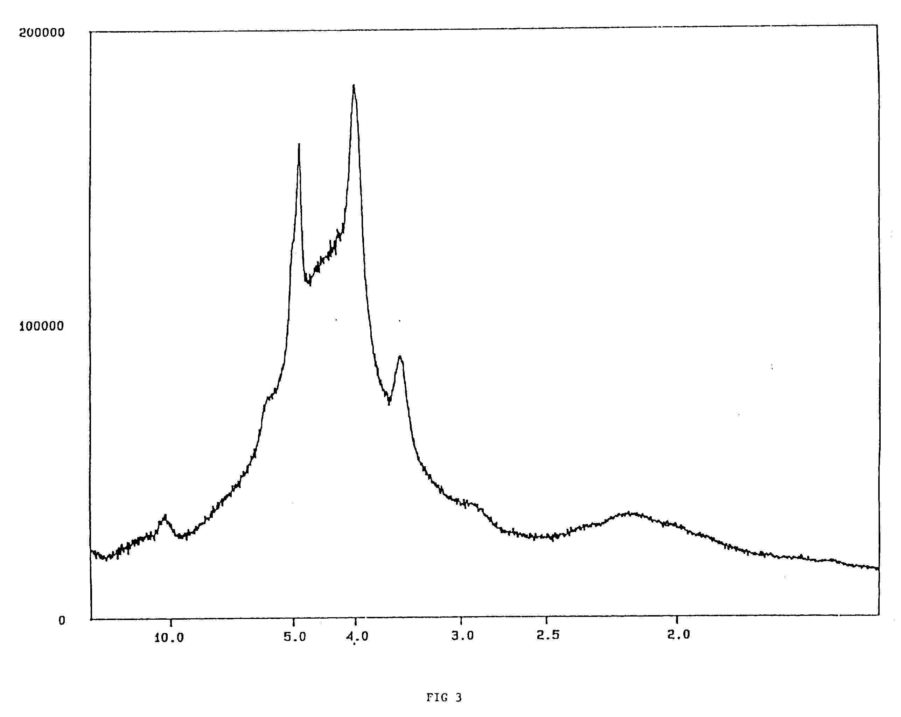

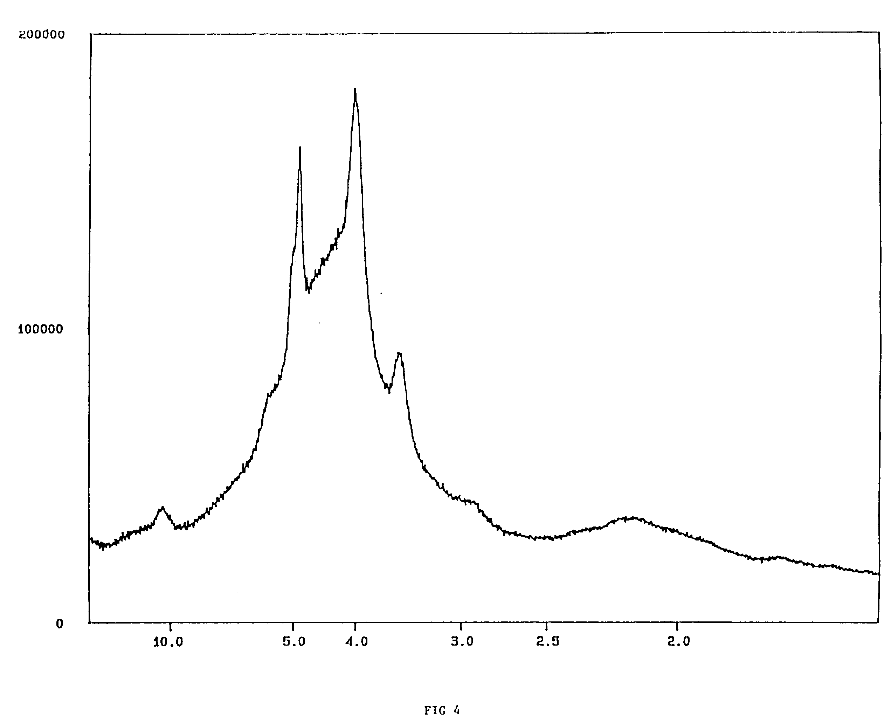

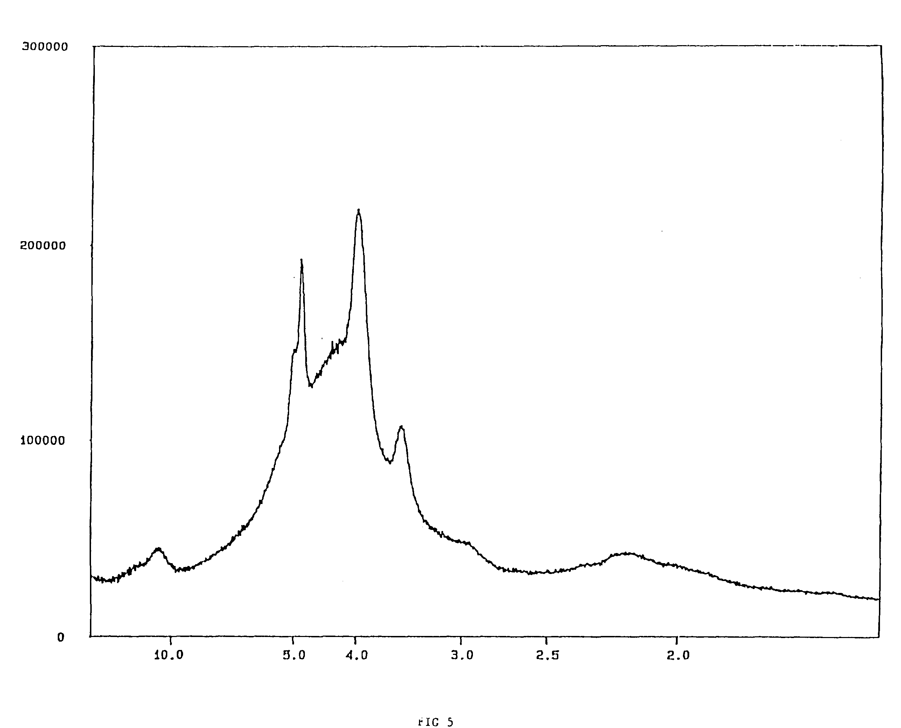

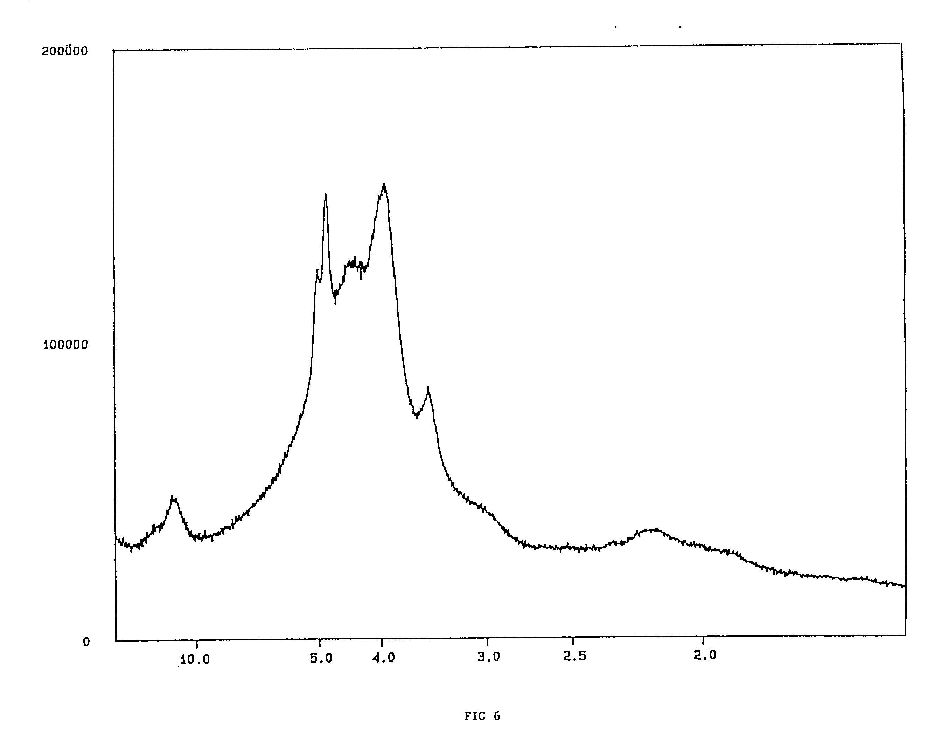

Les figures 1 à 6 représentent le spectre de diffraction aux rayons X des copolyamides des exemples 21, 22, 24, 26, 27 et 28 respectivement. L'abscisse est la distance interréticulaire, exprimée en Angstrom; l'ordonnée est l'intensité diffractée (la valeur est donnée par un compteur intrinsèque à l'appareil, et dépend du temps d'acquisition).

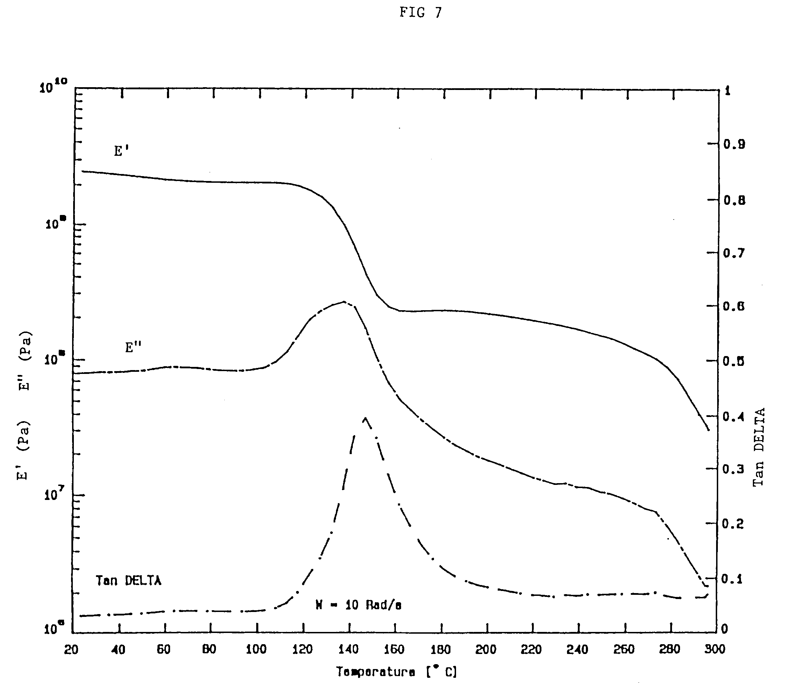

La figure 7 représente, pour un copolyamide selon la présente invention, les modules de Young E' et E", exprimés en Pascal, ainsi que tg δ (rapport E" sur E'), en fonction de la température, avec une pulsation W de 10 rad/s. Les mesures ont été effectuées sur un appareil RSA2.

La présente invention a pour objet un copolyamide présentant sur tout le domaine de composition une cristallinité élevée avec un ΔH > 3,5 cal/g et un pourcentage de cristallinité déterminé par rayons X supérieur à 10%, présentant un point de fusion élevé pF > 270°C tel que déterminé par analyse DSC, consistant, en mole, en :
a) 1 à 99% d'une unité A de formule

   -(NH-R-NHCO-AR1-CO)-

   dans laquelle:
   R représente une chaine carbonée -(CH2)n- où n est compris entre 4 et 6;
   AR1 représente le résidu issu de la condensation de l'acide térephtalique et/ou de sa forme diester; et
b) 99 à 1% d'une unité B de formule

   -(NH-R-NHCO-AR2-CO)-

   dans laquelle:
   R représente la même chaine carbonée que dans l'unité A;
   AR2 représente le résidu issu de la condensation de l'acide naphtalène-2,6-dicarboxylique et/ou de sa forme diester; et
c) 0 à 15% d'un tiers monomère.

Le terme "diester" tel qu'utilisé dans la présente description signifie le diester obtenu avec un groupe dérivé d'un alcool. Tout groupe est appropprié, tel aryle, par exemple phényle, tel alkyle en C₁ à C₂₀. Un groupe dérivé préféré est un groupe alkyle en C₁ à C₆, de préférence en C₁ à C₄. Avantageusement, le diester est le diester méthylique.

Les abréviations utilisées dans la présente description sont les abréviations courantes pour l'homme de l'art. Ainsi, les termes "6,6"; "6,I"; "6,T"; "6,BOB"; "6, N26"; ... désignent les motifs issus de la condensation de l'hexaméthylènediamine avec respectivement: l'acide isophtalique, l'acide térephtalique, le 4,4'-dicarboxydiphénylènéther, l'acide naphtalène-2,6-dicarboxylique ou de leurs formes diesters. De même, les termes "8,I" et "8,T" désignent les motifs issus de la condensation de l'octaméthylènediamine avec l'acide isophtalique et térephtalique, respectivement. Les termes 6,T/6,BOB; 6,T/6; 6,T/12; 6,T/6,I; 6,T/6,N26 désignent les copolyamides composés des motifs 6,T avec, respectivement, le motif 6,BOB; le motif issu de l'acide 6-amino-hexanoïque ou le lactame 6; le motif issu de l'acide-12-aminododécanoïque ou le lactame 12; le motif 6,I et le motif 6,N26.

Dans un mode de réalisation préféré de la présente invention, le motif A représente de 50 à 90% en mole et le motif B représente de 50 à 10% en mole. Avantageusement, le motif A représente de 60 à 80% en mole et le motif B représente de 40 à 20% en mole.

Selon un mode d'exécution de la présente invention, R représente la chaîne carbonée -(CH₂)ₙ -où n est égal à 6; la diamine est alors l'hexaméthylènediamine, désignée ci-après HMDA.

Selon un mode de réalisation préféré, AR₁ est l'acide térephtalique et AR₂ est le diester méthylique de l'acide naphtalène-2,6-dicarboxylique.

Les présents copolyamides peuvent comprendre jusqu'à 15% en mole d'un troisième motif issu soit de la substitution partielle d'un des composants diacide par un autre diacide, soit de la substitution partielle du composant diamine par une autre diamine, soit de l'ajout d'un composé polycondensable de type lactame ou aminoacide. L'adjonction de ce tiers monomère est envisagée dans la mesure où les propriétés du copolyamide selon la présente invention restent substantiellement inchangées; à cette fin, l'homme de l'art appréciera l'influence de l'adjonction de tiers-monomères. On peut citer ainsi l'acide isophtalique, les lactames ou aminoacides en C₆, C₁₁ ou C₁₂ à titre d'exemple.

Les polyamides peuvent aussi comprendre des additifs habituels des polyamides tels que: stabilisants à la lumière et à la chaleur, colorants, azurants optiques, plastifiants, agents de démoulage, agent d'ignifugation et autres. Les polyamides selon la présente invention peuvent également être mélangés avec d'autres homo- ou co-polyamides, ajoutés en une proportion jusqu'à 100% par rapport au polyamide selon la présente invention.

Les polyamides selon la présente invention peuvent également être mélangés avec d'autres polymères, par exemple les copolymères de l'éthylène, l'anhydride maléique et les acrylates de méthyle, éthyle ou butyle par exemple, ces copolymères étant utilisés en général afin d'améliorer les propriétés de résistance aux chocs à des teneurs jusqu'à 40% en masse.

On peut également ajouter des agents nucléants connus de l'homme de l'art, comme le talc, généralement à des teneurs de 0,1 à 15% en poids. On peut se référer au brevet US 3 755 221 de HITCH (28 Août 1973) qui décrit des agents nucléants pour des polyamides 6,6.

La présente invention a aussi pour objet les compositions contenant les polyamides précités en association avec une charge présente en une quantité jusqu'à 200%, de préférence de 10 à 60%, en poids par rapport au présent polyamide. Des charges envisagées dans le cadre de la présente invention incluent les charges minérales classiques, telles que les charges choisies dans le groupe, données à titre non limitatif, comprenant : kaolin, magnésie, scories, etc., fibres de verre. La charge utilisée plus généralement est formée de fibres de verre, dont la dimension est avantageusement comprise entre 0,20 et 25 mm. On peut y inclure un agent de couplage pour améliorer l'adhésion des fibres au polyamide, tels que les silanes ou les titanates qui sont connus de l'homme de l'art. Des charges organiques peuvent également être utilisées, telles que le graphite ou les fibres aramides (polyamides entièrement aromatiques).

La présente invention a aussi pour objet une composition contenant de plus jusqu'à 200% en poids, de préférence 100%, par rapport au polyamide, d'un ou plusieurs additifs ou charges classiques précités.

La présente invention a également pour objet les articles obtenus à partir des polyamides ou des compositions précitées, dénommées de façon générique "copolyamides".

Selon un mode de réalisation préféré de la présente invention, l'article est un article obtenu par moulage, avantageusement par moulage injection.

Les polyamides selon la présente invention peuvent être obtenus par tous procédés appropriés de préparation des polyamides. On pourra, notamment pour les procédés de synthèse à l'état solide ou fondu, employer les formes acides ou les formes diesters de l'acide térephtalique et/ou naphtalène-2,6-dicarboxylique, par exemple les diesters méthyliques.

Des exemples non-limitatifs de procédés de préparation sont donnés ci-après, lesquels sont rapportés à l'HMDA en tant que diamine à titre de simplfication.

Selon un premier procédé suivant la présente invention, ledit procédé comprend l'étape unique de réaction entre l'acide térephtalique et l'acide naphtalène-2,6-dicarboxylique ou leur diester, et la HMDA. Les conditions opératoires sont une température de 280 à 350°C, de préférence 290 à 330°C, une atmosphère inerte, une pression de 0,01 à 50 bar, de préférence 200 mbar à 30 bar, et un temps de réaction de 20 mn à 10 h, de préférence 1 à 6 heures.

Selon un second procédé de préparation suivant la présente invention, ledit procédé comprend les étapes de:
a) réaction entre l'acide térephtalique et l'acide naphtalène-2,6-dicarboxylique ou leur diester avec 10 à 99% et de préférence de 35 à 75% en poids de la diamine HMDA; et
b) réaction du produit ainsi formé avec le solde de HMDA.

Dans les deux étapes, la température est comprise entre 240 et 350°C, de préférence 280 et 330°C. Le procédé est mis en oeuvre sous atmosphère inerte, sous pression jusque 50 bar ou à pression atmosphérique, ou sous vide. La réaction s'effectue généralement en 1 à 10 heures.

Dans les procédés selon la présente invention, il est possible d'utiliser, de préférence au cours de la seconde étape en ce qui concerne le dernier procédé, les catalyseurs connus de polyamidification, tels que les acides phosphoriques et hydrophosphoreux, présents en des proportions jusqu'à 1% en poids.

Il est possible d'ajouter les charges ou additifs habituels précédemment cités au milieu réactionnel à divers moments du procédé selon des critères connus de l'homme de l'art.

Un troisième procédé de préparation selon la présente invention comprend une première étape de polymérisation jusqu'à un degré d'avancement compris entre 40 et 99%, suivie d'une seconde étape consistant en une remontée en viscosité. La première étape peut être mise en oeuvre selon un procédé classique, par exemple l'un des deux procédés précités. A l'issue de cette étape, le prépolymère peut être transféré directement dans une machine de type extrudeuse ou bien un réacteur horizontal qui permettent des temps de séjour variant de 5 minutes à 1 heure, de préférence 15 à 45 minutes, afin de subir une remontée en viscosité. Le transfert peut également être effectué via la récupération du prépolymère solide sous forme de granulés ou de poudre. Cette remontée en viscosité peut également être effectuée à l'état solide par chauffage du prépolymère à l'état de poudre ou de granulés à une température comprise entre Tg et Tf (généralement à une température d'environ Tg +100°C) sous vide ou sous courant de gaz inerte.

La présente invention est illustrée à l'aide des exemples suivants, non limitatifs de la portée de celle-ci, susceptibles de variantes aisément accessibles à l'homme de l'art.

Dans les exemples suivants, la détermination des points de fusion est fournie par analyse DSC - l'analyse en DSC est effectuée par un appareil PERKIN ELMER DSCA. L'échantillon subit un premier cycle thermique de la température ambiante à 350°C à 20°C/mn, suivi d'un refroidissement à 40°C/mn jusqu'à température ambiante. Un deuxième cycle thermique de montée en température est alors effectué (20°C/mn). Les points de fusion Tf et température de transition vitreuse Tg sont déterminés à partir de ce deuxième cycle. La température de transition vitreuse étant déterminée au point d'inflexion et la température de fusion étant donnée par le minimum du pic endotherme de fusion observé. L'enthalpie de fusion ΔH est donnée en cal/10 g.

Les viscosités inhérentes sont déterminées à une concentration de 0,5% dans le métacrésol à 25°C.

La détermination du degré de cristallinité est effectuée par une mesure de diffraction des rayons X sur le polymère réduit à l'état de poudre. On laisse refroidir le polymère en fusion en fin de synthèse dans le réacteur par retrait du bain chauffant. Il est ensuite réduit en poudre et introduit dans un tube capillaire en quartz et observé en transmission. L'intensité diffractée est recueillie sur un compteur courbe dans le domaine angulaire 2θ [3,120°]. On utilise un générateur à anode tournante RIGAKU. Le taux de cristallinité, après correction de la contribution du capillaire, est calculé d'après la méthode de MURTHY N.S. (Polymer 1990, 31(6), p. 996-1002) qui permet de comparer les cristallinités de polymères semi-cristallins.

L'analyse thermomécanique DMA est réalisée à l'aide d'un instrument RSA2 (Rheometric Solid Analyser) à une pulsation de 10 radians par seconde sur une éprouvette obtenue par injection (dimension 63,5/12/4 mm). Le module est obtenu en mode "flexion trois points".

### EXEMPLES 1 à 7 (comparatifs)

On prépare des copolyamides 6,T/6,BOB de la façon suivante.

### Exemple 1

On utilise un réacteur en verre (hauteur 200 mm, diamètre 40 mm) muni d'un agitateur à ancre en verre. Le réacteur est muni d'une colonne vigreux suivi d'un réfrigérant droit permettant la collecte de l'eau de condensation dans une éprouvette graduée. Les réactifs sont introduits dans le réacteur sous forme de poudre; de façon générale, on laisse ensuite le réacteur chargé sous un léger balayage d'azote pendant 30 à 60 mn afin d'éliminer les traces d'oxygène. On diminue ensuite le débit d'azote afin de maintenir simplement le réacteur sous azote (bulle à bulle).

On introduit 9,9 g d'acide BOB, 14,85 g d'acide térephtalique et 15,25 g d'HMDA.

On plonge le réacteur dans le bain chauffant maintenu à 250°C; après 5 mn, on porte de façon progressive la température à 360°C à environ 1,5°C/mn. Pendant cette montée en température, on observe la distillation des effluents de polycondensation, le milieu devient progressivement plus fluide et sa viscosité augmente. Vers 350°C, le milieu a la consistance d'une pâte très épaisse, l'agitation est fixée à 20 tr/mn, puis maintenue pendant encore 20 mn au bout desquelles l'on n'observe plus visuellement d'évolution du milieu. La réaction est alors arrêtée. Le volume total des effluents est de 4,3 ml (4,6 ml d'eau en théorie).

Le polymère obtenu possède une température de transition vitreuse de 135°C et une température de fusion de 311°C, qui sont reportées dans le tableau 1 ci-après.

### Exemple 2

On introduit 12,8 g d'acide BOB, 12,4 g d'acide térephtalique et 14,8 g d'HMDA dans le réacteur de l'exemple 1.

On plonge le réacteur dans le bain chauffant maintenu à 240°C, après 10 mn, on met l'agitation à 25 tr/mn, le milieu réactionnel est alors pâteux. On porte ensuite la température à 330°C sur une période de 60 mn. Pendant cette montée en température, on observe la distillation des effluents de polycondensation, le milieu devient progressivement plus transparent, et sa viscosité augmente. Vers 330°C, le milieu a la consistance d'une pâte très épaisse. L'agitation est baissée (10 tr/mn). La température du bain est encore augmentée jusqu'à 340°C sur 15 mn, au bout desquelles la réaction est arrêtée. Le volume total des effluents est de 4,5 ml (4,6 ml d'eau en théorie).

Le polymère obtenu possède une température de transition vitreuse de 141°C et une température de fusion de 294°C, qui sont reportées dans le tableau 1 ci-après.

### Exemples 3 à 7

On opère de la même manière que dans l'exemple 2 pour les exemples 3 à 7, les températures Tg et Tf, ainsi que l'enthalpie de fusion sont reportées dans le tableau 1 ci-après.

**Tableau 1**

| Ex.n° | % mol. 6,T | Tg (°C) | Tf (°C) | ΔH (cal/10g) |
|---|---|---|---|---|
| 1 | 70 | 135 | 311 | 57 |
| 2 | 60 | 141 | 294 | 60 |
| 3 | 50 | 140 | 273 | 8 |
| 4 | 43,7 | 145 | 262 | 1 |
| 5 | 34,1 | 130 | amorphe | 0 |
| 6 | 25 | 128 | amorphe | 0 |
| 7 | 20 | 146 | amorphe | 0 |

Les copolyamides 6,T/6,BOB présentent des Tg et des Tf appropriés, mais pour des pourcentages molaires en 6,T inférieurs à environ 40%, il existe un domaine amorphe avec perte de cristallinité.

### EXEMPLES 8 à 11 (comparatifs)

On prépare des copolyamides 6,T/6 de façon similaire à l'exemple 2 à partir des monomères: acide térephtalique, acide amino-6-hexanoïque et HMDA.

Les températures de Tg et de Tf sont reportées dans le tableau 2 ci-après.

**Tableau 2**

| Ex. n° | % mol 6,T | Tg (°C) | Tf (°C) |
|---|---|---|---|
| 8 | 31 | 85 | 215 |
| 9 | 41 | 94 | 264 |
| 10 | 52 | 100 | 300 |
| 11 | 59 | - | 320 |

Ces copolyamides ne présentent pas les températures Tg et Tf appropriées pour des pourcentages molaires en 6,T inférieurs à 50%. Pour des pourcentages molaires en 6,T supérieurs à 50%, la Tg reste inappropriée et la température de fusion s'élève à des valeurs rendant la synthèse difficilement faisable par les procédés en milieu fondu.

### EXEMPLES 12 à 15 (comparatifs)

On prépare des copolyamides 6,T/12 de manière similaire à l'exemple 2 à partir des monomères: acide térephtalique, acide amino-12-dodécanoïque et HMDA.

Les températures Tg et Tf et L'enthalpie de fusion sont reportées dans le tableau 3 ci-après.

**Tableau 3**

| Ex.n° | % mol. 6,T | Tg (°C) | Tf (°C) | ΔH (cal/10g) |
|---|---|---|---|---|
| 12 | 26 | 58 | amorphe | 0 |
| 13 | 35 | 58 | 230 | 10 |
| 14 | 44 | 71 | 275 | 30 |
| 15 | 56 | 81 | 290 | 80 |

Ces copolyamides sont amorphes pour des teneurs en 6,T, exprimées en pourcentage molaire, inférieures à 30%. De plus, ils ne présentent pas une Tg appropriée, celle-ci restant inférieure à 100°C.

### EXEMPLES 16 à 18 (comparatifs)

On prépare des copolyamides 6,T/6I de manière similaire à l'exemple 2 à partir d'acide térephtalique, d'acide isophtalique et d'HMDA.

Les températures Tg, Tf et l'enthalpie de fusion ΔH sont reportées dans le tableau 4 ci-après.

**Tableau 4**

| Ex.n° | % mol. 6,T | Tg (°C) | Tf (°C) | ΔH (cal/10g) |
|---|---|---|---|---|
| 16 | 30 | 127 | amorphe | 0 |
| 17 | 50 | 126 | 270 | 60 |
| 18 | 60 | 123 | 286 | 110 |

Ces copolyamides sont amorphes pour des teneurs en 6,T, exprimées en pourcentage molaire, inférieures à 35%.

### EXEMPLES 19 à 29 (selon l'invention)

On prépare des copolyamides 6,T/6,N26 de la façon suivante.

### Exemple 19

On introduit 12,23 g du diester méthylique du diacide 2,6-naphtalène-dicarboxylique, 0,92 g d'acide térephtalique et 7,11 g d'HMDA dans un réacteur en verre de dimension 160/32 mm, équipé de manière similaire à l'exemple 1.

On plonge le réacteur dans le bain chauffant maintenu à 220°C, après 10 mn, on met l'agitation à 25 tr/mn, le milieu réactionnel est alors pâteux. La température du bain est ensuite augmentée progressivement jusqu'à 320°C sur une période de 60 mn. Pendant cette montée en température, on observe la distillation des effluents de polycondensation, le milieu devient progressivement plus transparent, et sa viscosité augmente. Ce réacteur est maintenu à 320°C pendant 40 à 60 mn au bout desquelles la réaction est arrêtée.

### EXEMPLES 20 à 29

On opère de manière similaire à l'exemple 19. Des mesures de viscosité inhérente pour les exemples 25 et 27 donnent les valeurs de 0,67 et 0,67.

Les températures Tg, Tf et l'enthalpie de fusion ΔH ainsi que le pourcentage de cristallinité déterminé par analyse par rayons X sont reportés dans le tableau 5 ci-après.

**Tableau 5**

| Ex.n° | % mol. 6,T | Tg (°C) | Tf (°C) | ΔH (cal/10g) | % cristallinité |
|---|---|---|---|---|---|
| 19 | 10 | 120 | 320 | 37 | - |
| 20 | 20 | 129 | 300 | 40 | - |
| 21 | 30 | 130 | 295 | 74 | 18 |
| 22 | 40 | 125 | 280 | 74 | 17,5 |
| 23 | 44 | 131 | 280 | 81 | - |
| 24 | 46 | 130 | 280 | 71 | 14 |
| 25 | 48 | 126 | 282 | 73 | - |
| 26 | 50 | 134 | 284 | 96 | 13 |
| 27 | 60 | 136 | 285 | 63 | 16 |
| 28 | 70 | 138 | 299 | 77 | 15 |
| 29 | 80 | 141 | 330 | 90 | - |

Les spectres de rayons X sont donnés dans la figure 1.

### EXEMPLE 30

Un polymère de composition 70/30 6T,6N similaire à celui de l'exemple 28 a été moulé par injection. Son module en fonction de la température est montré sur la figure 7.

Les présents copolyamides présentent sur tout le domaine de composition les propriétés de cristallinité, une Tg > 120°C et une Tf > 270°C.

## Revendications

1. Copolyamide présentant sur tout le domaine de composition une cristallinité élevée avec un ΔH > 3,5 cal/g et un pourcentage de cristallinité déterminé par rayons X supérieur à 10%, présentant un point de fusion élevé pF > 270°C tel que déterminé par analyse DSC, consistant, en mole, en :
a) 1 à 99% d'une unité A de formule
-(NH-R-NHCO-AR1-CO)-
dans laquelle:
R représente une chaine carbonée -(CH₂)ₙ- où n est compris entre 4 et 6;
AR1 représente le résidu issu de la condensation de l'acide térephtalique et/ou de sa forme diester; et
b) 99 à 1% d'une unité B de formule
-(NH-R-NHCO-AR2-CO)-
dans laquelle:
R représente la même chaine carbonée que dans l'unité A;
AR2 représente le résidu issu de la condensation de l'acide naphtalène-2,6-dicarboxylique et/ou de sa forme diester; et
c) 0 à 15% d'un tiers monomère.

2. Copolyamide selon la revendication 1, caractérisé en ce que R représente une chaine carbonée -(CH₂)ₙ- où n est égal à 6.

3. Copolyamide selon la revendication 1 ou 2, caractérisé en ce que le motif A représente de 50 à 90% en mole et le motif B représente de 50 à 10% en mole.

4. Copolyamide selon la revendication 3, caractérisé en ce que le motif A représente de 60 à 80% en mole et le motif B représente de 40 à 20% en mole.

5. Copolyamide selon l'une quelconque des revendications 1 à 4, caractérisé en ce que AR1 est le résidu de l'acide téréphtalique et AR2 est le résidu du diester méthylique de l'acide naphtalène-2,6-dicarboxylique.

6. Composition contenant un polyamide selon l'une quelconque des revendications 1 à 5 et jusqu'à 200% en poids, par rapport au poids du copolyamide, d'un ou plusieurs additifs ou charges classiques.

7. Objet façonné obtenu à partir de copolyamide selon l'une quelconque des revendications 1 à 5 ou de la composition selon la revendication 6.

8. Procédé de préparation d'un copolyamide selon l'une quelconque des revendications 1 à 5, caractérisé en ce qu'il comprend l'étape unique de réaction entre l'acide téréphtalique et l'acide naphtalène-2,6-dicarboxylique ou leurs diesters, et la diamine, à une température comprise entre 280 et 350°C, pendant un temps de réaction de 20 minutes à 10 heures.

9. Procédé de préparation d'un copolyamide selon l'une quelconque des revendications 1 à 5, caractérisé en ce qu'il comprend les étapes de:
a) réaction entre l'acide téréphtalique et l'acide naphtalène-2,6-dicarboxylique ou leurs diesters avec 10 à 99% et de préférence de 35 à 75% en poids de la diamine; et
b) réaction du produit ainsi formé avec le solde de diamine;
la température de réaction étant comprise entre 240 et 350°C, le temps de réaction étant compris entre 1 et 10 heures.

10. Procédé de préparation d'un copolyamide selon l'une quelconque des revendications 1 à 5, caractérisé en ce qu'il comprend une première étape de polymérisation, jusqu'à un degré d'avancement compris entre 40 et 99%, des acides téréphtalique, naphtalène-2,6-dicarboxylique ou leurs diesters avec la diamine, la température de réaction étant comprise entre 280 et 350°C, le temps de réaction étant compris entre 20 minutes et 10 heures, suivie d'une seconde étape consistant en une remontée en viscosité.

## Patentansprüche

1. Copolyamid, das über den gesamten Bereich der Zusammensetzung eine hohe Kristallinität mit einem Wert ΔH > 3,5 kal/g und einen Prozentsatz an Kristallinität, bestimmt durch Röntgenstrahlen, von mehr als 10 % aufweist und einen hohen Schmelzpunkt Schmp.> 270°C besitzt, bestimmt durch DSC-Analyse, wobei das Copolyamid, berechnet in mol, aus
a) 1 bis 99 % einer Einheit A der Formel
-(NH-R-NHCO-AR₁-CO)-
in der:
R eine Kohlenwasserstoffkette -(CH₂)ₙ- darstellt, wobei n zwischen 4 und 6 liegt;
AR₁ den Rest darstellt, der aus der Kondensation von Terephthalsäure und/oder ihrer Diesterform stammt; und
b) 99 bis 1 % einer Einheit B der Formel
-(NH-R-NHCO-AR₂-CO)-
in der:
R dieselbe Kohlenwasserstoffkette wie in der Einheit A darstellt;
AR₂ den Rest darstellt, der aus der Kondensation von Naphthalin-2,6-dicarbonsäure und/oder ihrer Diesterform stammt; und
c) 0 bis 15 % eines dritten Monomers
besteht.

2. Copolyamid nach Anspruch 1, dadurch gekennzeichnet, daß der Rest R eine Kohlenwasserstoffkette -(CH₂)ₙ- darstellt, wobei n gleich 6 ist.

3. Copolyamid nach Anspruch 1 oder 2, dadurch gekennzeichnet, daß die Einheit A 50 bis 90 Mol-% und die Einheit B 50 bis 10 Mol-% darstellt.

4. Copolyamid nach Anspruch 3, dadurch gekennzeichnet, daß die Einheit A 60 bis 80 Mol-% und die Einheit B 40 bis 20 Mol-% darstellt.

5. Copolyamid nach einem der Ansprüche 1 bis 4, dadurch gekennzeichnet, daß der Rest AR₁ der Rückstand der Terephthalsäure ist und AR₂ der Rückstand des Dimethylesters der Naphthalin-2,6-dicarbonsäure ist.

6. Zusammensetzung, enthaltend ein Polyamid nach einem der Ansprüche 1 bis 5 und bis zu 200 Gew.-%, bezogen auf das Gewicht des Copolyamids, eines oder mehrerer herkömmlicher Additive oder Füllstoffe.

7. Formgegenstand, erhalten ausgehend von dem Copolyamid nach einem der Ansprüche 1 bis 5 oder der Zusammensetzung nach Anspruch 6.

8. Verfahren zur Herstellung eines Copolyamids nach einem der Ansprüche 1 bis 5, dadurch gekennzeichnet, daß er einen einzigen Reaktionsverfahrensschritt zwischen Terephthalsäure und der Naphthalin-2,6-dicarbonsäure oder deren Diestern und dem Diamin bei einer Temperatur zwischen 280 °C und 350 °C für eine Reaktionsdauer von 20 Minuten bis 10 Stunden umfaßt.

9. Verfahren zur Herstellung eines Copolyamids nach einem der Ansprüche 1 bis 5, dadurch gekennzeichnet, daß es die folgenden Verfahrensschritte umfaßt:
a) Reaktion zwischen der Terephthalsäure und der Naphthalin-2,6-dicarbonsäure oder deren Diestern mit 10 bis 99 Gew.-%, vorzugsweise mit 35 bis 75 Gew.-%, des Diamins; und
b) Reaktion des auf diese Weise gebildeten Produktes mit der weiteren notwendigen Menge des Diamins;
wobei die Reaktionstemperatur 240 bis 350 °C beträgt und die Reaktionsdauer 1 bis 10 Stunden beträgt.

10. Verfahren zur Herstellung eines Copolyamids nach einem der Ansprüche 1 bis 5, dadurch gekennzeichnet, daß es einen ersten Verfahrensschritt der Polymerisation bis zu einem Fortschreitungsgrad zwischen 40 und 99 % der Terephthalsäure, der Naphthalin-2,6-dicarbonsäure oder deren Diestern mit dem Diamin umfaßt, wobei die Reaktionstemperatur 280 bis 250 °C beträgt und die Reaktionsdauer 20 Minuten bis 10 Stunden beträgt, gefolgt von einem zweiten Verfahrensschritt, der aus einem Viskositätsanstieg besteht.

## Claims

1. Copolyamide exhibiting, over the entire composition range, a high crystallinity with a ΔH > 3.5 cal/g and a percentage of crystallinity, determined by X-rays, of greater than 10% and exhibiting a high melting point M.p. > 270°C, as determined by DSC analysis, consisting, in moles, of:
a) 1 to 99% of a unit A of formula
-(NH-R-NHCO-AR1-CO)-
in which:
R represents a carbon-comprising chain -(CH₂)ₙ- where n is between 4 and 6;
AR1 represents the residue resulting from the condensation of terephthalic acid and/or of its diester form; and
b) 99 to 1% of a unit B of formula
-(NH-R-NHCO-AR2-CO)-
in which:
R represents the same carbon-comprising chain as in the unit A;
AR2 represents the residue resulting from the condensation of naphthalene-2,6-dicarboxylic acid and/or of its diester form; and
c) 0 to 15% of a third monomer.

2. Copolyamide according to Claim 1, characterized in that R represents a carbon-comprising chain -(CH₂)ₙ- where n is equal to 6.

3. Copolyamide according to Claim 1 or 2, characterized in that the unit A represents from 50 to 90% in moles and the unit B represents from 50 to 10% in moles.

4. Copolyamide according to Claim 3, characterized in that the unit A represents from 60 to 80% in moles and the unit B represents from 40 to 20% in moles.

5. Copolyamide according to any one of Claims 1 to 4, characterized in that AR1 is the residue of terephthalic acid and AR2 is the residue of the dimethyl ester of naphthalene-2,6-dicarboxylic acid.

6. Composition comprising a polyamide according to any one of Claims 1 to 5 and up to 200% by weight, with respect to the weight of the copolyamide, of one or more conventional additives or fillers.

7. Shaped item obtained from copolyamide according to any one of Claims 1 to 5 or from the composition according to Claim 6.

8. Process for the preparation of a copolyamide according to any one of Claims 1 to 5, characterized in that it comprises the single stage of reaction between terephthalic acid and naphthalene-2,6-dicarboxylic acid or their diesters and the diamine at a temperature of between 280 and 350°C, for a reaction time of 20 minutes to 10 hours.

9. Process for the preparation of a copolyamide according to any one of Claims 1 to 5, characterized in that it comprises the stages of:
a) reaction between terephthalic acid and naphthalene-2,6-dicarboxylic acid or their diesters with 10 to 99% and preferably from 35 to 75% by weight of the diamine; and
b) reaction of the product thus formed with the balance of diamine;
the reaction temperature being between 240 and 350°C and the reaction time being between 1 and 10 hours.

10. Process for the preparation of a copolyamide according to any one of Claims 1 to 5, characterized in that it comprises a first stage of polymerization, up to a degree of progression of between 40 and 99%, of terephthalic acid, naphthalene-2,6-dicarboxylic acid or their diesters with the diamine, the reactipn temperature being between 280 and 350°C and the reaction time being between 20 minutes and 10 hours, followed by a second stage consisting of a rise in viscosity.
